(19) Europäisches Patentamt
European Patent Office
Office européen des brevets

(11) **EP 3 907 987 B1**

(12) **EUROPÄISCHE PATENTSCHRIFT**

(45) Veröffentlichungstag und Bekanntmachung des Hinweises auf die Patenterteilung:
**07.09.2022 Patentblatt 2022/36**

(21) Anmeldenummer: **20173132.0**

(22) Anmeldetag: **06.05.2020**

(51) Internationale Patentklassifikation (IPC):
*H04N 13/354* (2018.01)     *H04N 13/363* (2018.01)
*H04N 13/324* (2018.01)     *H04N 13/341* (2018.01)
*H04N 13/30* (2018.01)

(52) Gemeinsame Patentklassifikation (CPC):
**H04N 13/324; H04N 13/341; H04N 13/354;
H04N 13/363;** H04N 2013/40; H04N 2013/405

(54) **VERFAHREN UND VORRICHTUNG ZUR PROJEKTION INDIVIDUELLER BILDER FÜR EINE MEHRZAHL AN BETRACHTERN**

METHOD AND DEVICE FOR PROJECTION OF INDIVIDUAL IMAGES FOR A PLURALITY OF VIEWERS

PROCÉDÉ ET DISPOSITIF DE PROJECTION DES IMAGES INDIVIDUELLES POUR UNE PLURALITÉ D'OBSERVATEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.11.2021 Patentblatt 2021/45**

(73) Patentinhaber: **Fraunhofer-Gesellschaft zur Förderung
der angewandten Forschung e.V.
80686 München (DE)**

(72) Erfinder:
• **BUES, Matthias
70569 Stuttgart (DE)**
• **WINGERT, Benjamin
70569 Stuttgart (DE)**

(74) Vertreter: **Pfenning, Meinig & Partner mbB
Patent- und Rechtsanwälte
Theresienhöhe 11a
80339 München (DE)**

(56) Entgegenhaltungen:
**US-A1- 2010 066 813     US-A1- 2013 169 637**

EP 3 907 987 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung, mit denen einer Mehrzahl an Betrachtern simultan individuelle Bilder anzeigbar sind. Dabei können Projektoren zum Einsatz kommen, die die Farben, aus denen die Bilder zusammengesetzt sind, periodisch zeitlich aufeinanderfolgend projizieren.

Stereoskopische Projektionssysteme werden häufig zur großflächigen Darstellung dreidimensionaler Information, z.B. von CAD-Daten, verwendet. Dabei wird für das linke und das rechte Auge je ein separates Bild auf dieselbe Fläche projiziert und betrachterseitig mittels einer geeigneten Brille wieder getrennt. Dieses Prinzip wird auch im 3D-Kino genutzt. Ein gebräuchliches Verfahren ist die zeitsequentielle Projektion, bei der Bilder für das linke und das rechte Auge abwechselnd projiziert und mit einer sogenannten Shutterbrille wieder getrennt werden. Die Shutterbrille gibt den Blick jeweils nur für das Auge frei, dessen Bild gerade projiziert wird.

Wird diese 3D-Darstellung mit räumlicher Positionsmessung der Betrachterposition (Head Tracking) kombiniert, kann eine maßstäbliche, perspektivisch korrekte Darstellung erreicht werden. Dies ist das Grundprinzip von projektionsbasierten virtuellen Umgebungen, z. B. CAVEs. (C. Cruz-Neira, D. J. Sandin, and T.A . DeFanti, "Surround-screen Projection-based Virtual Reality: The Design and Implementation of the CAVE," in Proceedings of the 20th Annual Conference on Computer Graphics and Interactive Techniques, 1993, pp. 135-142). Im Stand der Technik kann jedoch nur ein einziges Stereobildpaar dargestellt werden, somit ist die maßstäbliche räumliche Darstellung nur für einen Betrachter möglich. Dies ist eine gravierende Einschränkung, weil dadurch eine echte Kollaboration mehrerer Personen in einer CAVE nicht möglich ist.

Ein bereits dargestellter Lösungsansatz für dieses Problem ist es, mehr als ein Stereobildpaar übereinander zu projizieren und diese wiederum durch entsprechend angepasste Brillen so zu trennen, dass jeder Betrachter das ihm zugeordnete Stereobildpaar sieht.

In einem existierenden, patentierten Verfahren (A. Zink and B. Froehlich, "Verfahren zur Darstellung von Mehreren Bildfolgen", WO2012/028586 A1) werden DLP-Projektoren (DLP = Digital Light Processing, Projektionsverfahren, bei dem das bildgebende Element eine Matrix aus Mikrospiegeln (DMD = Digital Micromirror Device) ist), eingesetzt, die das Bild farbsequentiell darstellen, also den Rot-, Grün-, und Blaukanal nacheinander. Bei einer typischen Bildfrequenz von 60 Hz wechseln die einzelnen Farbkanäle also mit einer Frequenz von 180 Hz. Die Lichtfarbe wird dabei durch ein mit der Bilddarstellung synchron rotierendes Farbrad mit je einem roten, grünen und blauen Sektor angepasst. Da das Farbrad die zeitlich unflexibelste Komponente des Systems ist, bestimmen dessen Drehfrequenz und Phase das Timing der Bilddarstellung.

Das existierende Verfahren nutzt diese hohe Farbwechselfrequenz zur zeitsequentiellen Darstellung der einzelnen Bilder für die Betrachter, die dann durch ausreichend schnelle Shutterbrillen wieder getrennt werden. Dazu wird bei drei gleichartigen Projektoren jeweils das Farbrad entfernt und dessen dann fehlendes Taktsignal durch einen externen Taktoszillator erzeugt. Dieses steuert alle drei Projektoren, wodurch diese auch untereinander synchronisiert werden. Durch das Entfernen des Farbrades stellen die Projektoren nur noch Graustufenbilder dar.

Durch Einbringen eines Farbfilters (rot, grün bzw. blau) an beliebiger Stelle im Lichtweg, z. B: vor dem Projektionsobjektiv, wird daraus je ein monochromes rotes, grünes bzw. blaues Bild. Die Farbkanäle der drei Eingangsbilder werden durch einen geeigneten Videoprozessor auf die jeweiligen Projektoren verteilt. Werden nun Projektoren verwendet, die von sich aus bereits eine zeitsequentielle 3D-Darstellung erlauben, kann somit mit drei Projektoren je ein eigenes Stereobildpaar für drei Betrachter erzeugt werden. Die Bildwechselfrequenz verdoppelt sich in diesem Fall auf 360 Hz. In A. Kulik et al., "C1x6: A Stereoscopic Six-user Display for Co-located Collaboration in Shared Virtual Environments, "ACM Trans. Graph., vol. 30, n0. 6, p. 188:1 - 188:12, 2011 werden zusätzlich Polarisationsfilter zur Separation eingesetzt, die die Anzahl der separierbaren Einzelbilder auf 12 verdoppeln und damit sechs unabhängige Betrachter ermöglichen.

Der wesentliche Nachteil dieses Verfahrens ist jedoch, dass es umfangreiche optische, mechanische und elektrische Modifikationen der verwendeten Projektoren erfordert. Schwerer wiegt noch, dass diese Modifikationen im Detail stark vom jeweiligen Projektortyp abhängig und bei einigen Projektoren sogar undurchführbar sind. Dies betrifft insbesondere den Ausbau des Farbrades, für den der Projektor weitgehend zerlegt werden muss. Hinzu kommt, dass im Farbrad meist auch ein Infrarotfilter integriert ist. Dieser reduziert die auf dem DMD auftreffende Wärmestrahlung und muss nach dem Ausbau des Farbrades durch einen geeigneten Infrarotfilter ersetzt werden. Da der Projektor hierfür in der Regel keine Einbauvorrichtung hat, muss diese jeweils konstruiert und gefertigt werden. Zudem muss die Zuführung des externen Taktsignals auf die Elektronik des jeweiligen Projektors angepasst werden.

Aufgabe der vorliegenden Erfindung ist es daher, ein Verfahren und eine Vorrichtung zur simultanen Projektion individueller Bilder für eine Mehrzahl an Betrachtern anzugeben, in denen Projektoren eingesetzt werden können, die die Farben in vorgegebener Weise periodisch zeitlich aufeinanderfolgend projizieren, wie dies beispielsweise bei den vorstehend beschriebenen Projektoren mit eingebautem Farbrad der Fall ist. Die Aufgabe stellt sich für nicht stereoskopische und stereoskopische Bilder.

Die Aufgabe wird gelöst durch das Verfahren zur Projektion von Bildern zur Betrachtung durch eine Mehrzahl M an Betrachtern nach Anspruch 1 und die Projektionsvorrichtung zur Projektion von Bildern zur Betrachtung durch eine Mehrzahl M an Betrachtern nach Anspruch 13. Die jeweiligen abhängigen Ansprüche geben vorteilhafte Weiterbildungen des erfindungsgemäßen Verfahrens und der erfindungsgemäßen Vorrichtung an.

Erfindungsgemäß wird ein Verfahren zur Projektion von Bildern zur Betrachtung durch eine Mehrzahl an Betrachtern angegeben. Die Anzahl an Betrachtern soll dabei mit M bezeichnet werden. Der Betriff "Projektion" kann hierbei gleichbedeutend mit "Anzeige" verstanden werden. Vorzugsweise wird unter Projektion ein Anzeigeverfahren verstanden, bei dem ein Projektor eine Oberfläche mit Licht bestrahlt, um auf der Oberfläche das Bild darzustellen. Die Oberfläche ist im Normalfall eben, es sind jedoch auch Verfahren möglich, in denen Oberflächen dreidimensionaler Körper bestrahlt werden.

Bevorzugt, aber nicht notwendig, sind die Bilder stereoskopische Bilder. Stereoskopische Bilder sind Bilder, die jeweils ein Teilbild für ein linkes und ein rechtes Auge eines Betrachters aufweisen.

Das erfindungsgemäße Verfahren projiziert vorzugsweise simultan mehrere Bilder, die jeweils einem Betrachter zugeordnet sind. Es wird also jeweils für jeden Betrachter ein individuelles Bild projiziert. Sollen also Bilder für eine Mehrzahl an M Betrachtern m dargestellt werden, so werden stets eine Anzahl von M individuellen Bildern $B_m$, m=1, ..., M, dargestellt. Der Index m soll hier den Betrachter angeben.

Unter einer simultanen Projektion mehrerer Bilder soll hier eine Projektion der individuellen Bilder verstanden werden, die von der Mehrzahl an Betrachtern als gleichzeitig wahrgenommen werden. Eine Mehrzahl an simultan projizierten Bildern wird also von den jeweiligen Betrachtern zum gleichen Zeitpunkt wahrgenommen. Die gleichzeitige Wahrnehmung wird dabei durch die Physiologie des Sehens bestimmt. Wie weiter unten beschrieben werden wird, werden die Farbkomponenten der Bilder oder Teilbilder der verschiedenen Betrachter zeitlich nacheinander projiziert und die Teilbilder unterschiedlicher Augen werden im Falle stereoskopischer Projektion zeitlich nacheinander projiziert. Die Frequenz der Projektion wird dabei jedoch so hoch gewählt, dass die Farbkomponenten als gleichzeitig wahrgenommen werden, obwohl sie zeitlich aufeinanderfolgend projiziert werden.

Die Bilder $B_m$ weisen im Falle stereoskopischer Bilder jeweils ein Teilbild $T_{m\,links}$ für ein linkes Auge des Betrachters m sowie ein Teilbild $T_{m\,rechts}$ für ein rechtes Auge des Betrachters m auf. Diese Teilbilder sollen hier als $T_{m\,a}$, $a \in$ {links, rechts} bezeichnet werden, wobei der Index a das Auge des entsprechenden Betrachters m angibt. Sind die Bilder $B_m$ nicht-stereoskopische Bilder, so sind die Teilbilder für einen gegebenen Betrachter identisch. In diesem Fall sollten die Teilbilder als $T_{m\,a=beide}$, bezeichnet werden. Der Fall a=beide soll im folgenden den nicht-stereoskopischen Fall kennzeichnen. Die Teilbilder $T_{m\,beide}$ können in diesem Fall auch die Bilder $B_m$ selbst sein. Sie werden hier als "Teilbilder" bezeichnet, um eine konsistente Beschreibung beider Fälle zu ermöglichen.

Jedes der Teilbilder $T_{m\,a}$ ist aus N, $N \in \mathbb{N}$ und $N \geq 2$, Farbkomponenten $F_{m\,a\,c}$, c = 1,..., N unterschiedlicher Farbe zusammengesetzt. Im Normalfall wird die Zahl der Farben bevorzugterweise N = 3 sein. Die Farbkomponenten $F_{m\,a\,c}$ sind in diesem Fall dann die Komponenten der Teilbilder $T_{m\,a}$ in diesen Farben. Die drei Farben können beispielsweise Rot, Grün und Blau sein. Die Indizes c = 1, 2, 3 entsprechen dann den Farben Rot, Grün und Blau in beliebiger, jedoch festgelegter Reihenfolge.

Erfindungsgemäß werden eine Anzahl von N Projektoren $P_n$, n = 1, ..., N eingesetzt, um die Bilder zu projizieren. Die Zahl der Projektoren N ist dabei gleich der Zahl der Farbkomponenten, aus denen die Bilder zusammengesetzt sind. Die Projektoren projizieren jeweils in zeitlich aufeinanderfolgenden Zeitintervallen $t_i$, Farbkomponenten der Teilbilder in festgelegter Reihenfolge. Die Zeitintervalle $t_i$ sollen hierbei jeweils die Zeitdauern bezeichnen, in denen jeweils eine Farbkomponente eines der Teilbilder eines der Bilder $B_m$ dargestellt wird. Die Länge oder Dauer $dt_i$ eines Zeitintervalls $t_i$ kann zum Beispiel 8,33 ms betragen. Im Falle stereoskopischer Bilder ist die Länge der Teilintervalle $t_i$ gleich der Anzeigedauer eines Bildes geteilt durch 2*M*N. Im Falle nicht stereoskopischer Bilder wäre die Länge der Zeitintervalle zum Beispiel die Anzeigedauer eines Bildes geteilt durch M*N, da die Teilbilder $T_{m\,a}$ für beide Augen des Betrachters m gleichzeitig dargestellt werden können, da sie identisch sind. Es wird in diesem Fall vorzugsweise ein Bild dargestellt, das durch beide Augen des Betrachters m betrachtet wird.

Erfindungsgemäß sind die Projektoren so eingerichtet, dass sie die N Farben der Farbkomponenten, also jene Farben, aus denen die Teilbilder jeweils zusammengesetzt sind, periodisch zeitlich in festgelegter Reihenfolge aufeinanderfolgend projizieren. In einer vorteilhaften Ausgestaltung der Erfindung können die Projektoren hierfür jeweils Farbräder aufweisen, die im Strahlengang einer Lichtquelle des entsprechenden Projektors angeordnet sind. Dabei können die Farbräder entlang ihres Umfangs jeweils Filtersegmente in den Farben der N Farbkomponenten aufweisen. Die Farbräder sind so angeordnet, dass der Strahlengang von der Lichtquelle des Projektors ausgehend durch jenen Bereich des Farbrades verläuft, durch die sich die Filtersegmente bei Drehen des Rads bewegen. Durch Drehen des Farbrades werden also nacheinander die Filtersegmente der unterschiedlichen Farben in den Strahlengang des Projektors bewegt.

Erfindungsgemäß werden die Projektoren so gesteuert, dass in jedem Zeitintervall $t_i$ alle N Farbkomponenten $F_{m\,a\,c}$, c = 1, ..., N eines Teilbilds $T_{m\,a}$ für ein Auge a im Falle stereoskopischer Bilder oder beide Augen bei nicht stereoskopischen Bildern eines der Betrachter m projiziert werden. Die Begriffe Zeitpunkt $t_i$ und Zeitintervall $t_i$ sollen hier synonym verwendet werden.

Außerdem projizieren die Projektoren zusammen im Laufe einer Periode alle Teilbilder $T_{m\,a}$ beider Augen a aller Betrachter m einmal. Als Periode wird dabei der Zeitraum angesehen, in dem ein Bild $B_m$ angezeigt wird. Die Dauer einer Periode ist also die Summe der Zeitintervalle $t_i$ zur Darstellung eines der Bilder $B_m$. Haben alle Zeitintervalle $t_i$ die gleiche Dauer dt, so ist die Dauer einer Periode also vorzugsweise 2*M*N*dt im Falle stereoskopischer Bilder oder M*N*dt im Falle nicht-stereoskopischer Bilder.

Vorteilhaft können die Projektoren baugleich sein, so dass sie die Farben der Farbkomponenten in der gleichen Reihenfolge projizieren. Da jedoch zu einem gegebenen Zeitpunkt jeweils unterschiedliche Farben dargestellt werden sollen, projizieren die Projektoren die N Farben vorzugsweise zeitlich gegeneinander versetzt.

Erfindungsgemäß ist im Falle stereoskopischer Bilder jedem Auge jedes Betrachters m ein Filter zugewiesen oder im nicht-stereoskopischen Fall beiden Augen zusammen ein Filter oder zwei synchron geschaltete Filter zugewiesen, wobei die Filter jeweils zwischen durchsichtig und undurchsichtig umschaltbar sind. Ist ein Filter auf durchsichtig geschaltet, so kann Licht der zur Darstellung verwendeten Farben den Filter durchtreten. Ist der Filter auf undurchsichtig geschaltet, so kann Licht der zur Darstellung verwendeten Farben den Filter nicht durchdringen.

Erfindungsgemäß wird jeweils der dem Auge a des Betrachters m zugewiesene Filter zu der Zeit $t_i$ bzw. in dem Zeitraum $t_i$, durchsichtig geschaltet, zu der bzw. in dem die Projektoren die Farbkomponenten $F_{m\,a\,c}$, c = 1, ..., N, des Teilbilds $T_{m\,a}$ anzeigen. Wie beschrieben, zeigen die Projektoren in einem gegebenen Zeitintervall $t_i$ jeweils alle Farbkomponenten für ein Teilbild für zumindest ein Auge eines der Betrachter an. Es wird dann gerade der Filter dieses Auges oder dieser Augen durchsichtig geschaltet, während alle anderen Filter, bei stereoskopischen Bildern also der Filter des anderen Auges des gleichen Betrachters und die Filter für beide Augen aller anderen Betrachter, undurchsichtig geschaltet sind.

In einer vorteilhaften Ausgestaltung der Erfindung kann eine Signalquelle einer der Anzahl der $T_{m\,a}$ gleiche Anzahl an Teilbildsignale bereitstellen, welche die Teilbilder $T_{m\,a}$ für beide Augen aller Betrachter darstellen. Die Zahl der Teilbildsignale ist also hier im Falle stereoskopischer Bilder gleich 2*M und im Faller nicht stereoskopischer Bilder gleich M. In dieser Ausführungsform der Erfindung können die jeweils N Farbkomponenten der Bildsignale auf die N Projektoren verteilt werden, indem für jedes der Teilbildsignale alle N Farbkomponenten dieses Bildsignals unterschiedlichen der Projektoren zugeführt werden. Auf diese Weise wird sichergestellt, dass kein Projektor gleichzeitig mehrere Farbkomponenten des gleichen Teilbildsignals erhält, da jeder Projektor in einem gegebenen Zeitintervall $t_i$ nur eine

Farbkomponente eines Teilbilds darstellen kann. Die Teilbildsignale können zum Beispiel über zwei separate Eingänge (z.B. HDMI) zugeführt werden oder zeitsequenziell mit doppelter Bildfrequenz (z.B. mit 120 Hz für ein 60Hz Bildsignal) mit jeweils zwei zeitlich aufeinanderfolgenden Teilbildern.

Vorzugsweise können die jeweils den Projektoren $P_n$ zugeführten Farbkomponenten $F_{m\,a\,c}$ um einen Zeitraum $Z_n$ von $Z_n$ = dt*(n-1) verzögert werden, wobei dt die zeitliche Länge der Zeitintervalle $t_i$ ist. Es wird hier davon ausgegangen, dass die Projektoren vorteilhafterweise miteinander synchronisiert sind und dass, beispielsweise bei der Verwendung von Farbrädern, die Phasenlage der Farben, also beispielsweise der roten, grünen und blauen Einzelbilder, mit dem Eingangsbildsignal synchronisiert ist. Erreicht also einen Projektor nacheinander eine rote, eine grüne und eine blaue Farbkomponente, so ist sein Farbrad mit diesen Eingangssignalen so synchronisiert, dass sich der rote Filter im Strahlengang befindet, wenn das rote Signal zugeführt wird, der grüne Filter, wenn das grüne Signal zugeführt wird und der blaue Filter, wenn das blaue Signal zugeführt wird. Stellen vorteilhafterweise die Signalquellen die Teilbilder $T_{m\,a}$ synchronisiert zur Verfügung, bedeutet dies, dass in den von den Signalquellen ausgehenden Signalen die roten Farbkomponenten aller Teilbilder gleichzeitig sind, die grünen Farbkomponenten aller Teilbilder gleichzeitig sind und die blauen Farbkomponenten aller Teilbilder gleichzeitig sind, wobei jedoch die verschiedenen Farbkomponenten zeitlich aufeinanderfolgen. In diesem Fall stehen die Farbkomponenten der gleichen Farbe von den Bildquellen gleichzeitig zur Verfügung, während die Projektoren jedoch die verschiedenen Farbkomponenten des gleichen Teilbilds gleichzeitig darstellen sollen. Die beschriebene Verzögerung bewirkt dann, dass die Gesamtheit aller N Projektoren zu einem gegebenen Zeitpunkt $t_i$ alle Farbkomponenten eines Teilbilds projiziert.

In einer vorteilhaften Ausgestaltung der Erfindung kann die genannte Verzögerung dadurch erreicht werden, dass den Projektoren jeweils ein First-In-First-Out-Speicher (FIFO-Speicher) vorgeschaltet wird, also ein Speicher, der die eingelesenen Daten in der Reihenfolge des Eingangs, jedoch um einen bestimmten Zeitbetrag verzögert, ausgibt. In dieser Ausführungsform der Erfindung kann vorteilhafterweise der dem Projektor $P_n$ vorgeschaltete FIFO-Speicher n-1 Zeitintervalle zwischenspeichern, die Zufuhr des Signals von der Signalquelle zum Projektor also um (n-1)*dt verzögern. Für den Projektor $P_1$ ergibt sich eine Verzögerung von 0, so dass dem Projektor kein FIFO-Speicher vorgeschaltet werden muss.

Bevorzugterweise ist die Anzahl der Farbkomponenten N = 3, da dies in den meisten Anwendungen der Fall ist. Die meisten Projektoren sind eingerichtet, die Farben Rot, Grün und Blau zu projizieren, so dass die Erfindung vorzugsweise mit den Farben Rot, Grün und Blau ausgeführt wird. In diesem Fall werden also Bildsignale der Farben Rot, Grün und Blau verarbeitet. Besonders vorteilhaft ist die Erfindung einsetzbar, wenn die Zahl der Betrachter M = 3 ist, da dann die Darstellung der Farbkomponenten der verschiedenen Teilbilder für jeden Projektor eine Periodendauer von 2MN hat, und nach Ablauf einer Periode wieder in gleicher Weise von vorne beginnt. Bei mehr oder weniger als drei Betrachtern ergibt sich eine Verschiebung zwischen der Darstellung der Farbkomponenten für die einzelnen Augen der Betrachter, was jedoch ebenfalls möglich ist.

Geht man von dem vorteilhaften Fall stereoskopischer Bilder mit drei Farbkomponenten und drei Betrachtern aus, so können die Bildsignale in einer Periode jeweils besonders vorteilhaft wie folgt projiziert werden:

Projektor 1: $L_{11}$, $L_{22}$, $L_{33}$, $R_{11}$, $R_{22}$, $R_{33}$, ...
Projektor 2: $L_{12}$, $L_{23}$, $L_{31}$, $R_{12}$, $R_{23}$, $R_{31}$, ...
Projektor 3: $L_{13}$, $L_{21}$, $L_{32}$, $R_{13}$, $R_{21}$, $R_{32}$, ...

Dabei bezeichnet $L_{mc}$ die Farbkomponente c für das linke Auge des Betrachters m und $R_{mc}$ die Farbkomponente c für das rechte Auge des Betrachters m.

Allgemein ist vorzugsweise M<=N sein. Vorzugsweise liegen für N>3 auch die Bildsignale in N einzelnen Farbkomponenten vorliegen, woebid dann die Projektoren also ein Eingangssignal mit N Farbkomponenten verarbeiten können. Unter dieser Voraussetzung lässt sich das vorstehende Schema einfach durch Einfügung einer Zeile je zusätzlicher Farbkomponente und einer Spalte in jeder Periode verallgemeinern, z.B. für N=4:

Projektor 1: $L_{11}$, $L_{22}$, $L_{33}$, $L_{44}$, $R_{11}$, $R_{22}$, $R_{33}$, $R_{44}$,...
Projektor 2: $L_{12}$, $L_{23}$, $L_{34}$, $L_{41}$, $R_{12}$, $R_{23}$, $R_{34}$, $R_{41}$,...
Projektor 3: $L_{13}$, $L_{24}$, $L_{31}$, $L_{42}$, $R_{13}$, $R_{24}$, $R_{31}$, $R_{42}$,...
Projektor 4: $L_{14}$, $L_{21}$, $L_{32}$, $L_{43}$, $R_{14}$, $R_{21}$, $R_{32}$, $R_{43}$,...

Für zwei Betrachter wären während des jeweils dritten Zeitintervalls entweder alle Filter geschlossen, oder sie würde das Bild eines der beiden Betrachter wiederholen. Letzteres würde für einen Betrachter eine Verdopplung der wahrgenommenen Bildhelligkeit ermöglichen.

Mehr als drei Betrachter bedingen die gleiche Anzahl an Farbkomponenten. Die Verallgemeinerung sieht dann wie folgt aus (M = Anzahl Betracher, N = Anzahl Farbkanäle, P=Projektor). Es ist hier nur das linke Auge L ausgeführt, beim rechten Auge R wiederholt sich das Schema entsprechend:

P1: L11, L22, ..., LMN, R...
P2: L12, L23, ..., LM(1), R...
P3: L13, L24, ..., LM(2), R...
PM: L1N, L2(1), ..., LM(N-1), R...

Vorteilhafterweise werden gleiche Farbkomponenten der Bilder $B_m$ für unterschiedliche Augen des gleichen Betrachters m dem gleichen der Projektoren zugeführt. Auf diese Weise ergibt sich eine gleiche Verteilung der Farbkomponenten auf die Projektoren für beide Augen.

Die beschriebenen Filter können vorteilhafterweise als Brille ausgestaltet sein, so dass jeweils ein Filter für ein rechtes Auge und ein Filter für ein linkes Auge des gleichen Betrachters als Brille ausgestaltet ist. Diese Ausgestaltung ermöglicht eine bequeme Betrachtung der projizierten Bilder. Bei der Projektion nicht-stereoskopischer Bilder können die beiden Filter einer Brille jeweils vorteilhaft synchronisiert sein.

Wie beschrieben können vorteilhafterweise die Projektoren die Farbkomponenten in der gleichen Reihenfolge projizieren. Besonders bevorzugt weisen dazu die Projektoren jeweils ein Farbrad auf, das sich im Strahlengang einer Lichtquelle des entsprechenden Projektors dreht und entlang seines Umfangs Filtersegmente in den N Farbkomponenten aufweist. Die Filtersegmente sind dabei so angeordnet, dass sie bei Drehen des Farbrades periodisch nacheinander durch den Strahlengang von der Lichtquelle zur Projektionsoberfläche bewegt werden. Der Projektor erzeugt auf diese Weise nacheinander Bilder der unterschiedlichen Farben.

Vorzugsweise sind alle Projektoren miteinander synchronisiert, so dass sie die unterschiedlichen Farbkomponenten jeweils gleichzeitig projizieren. Die Zeiträume $t_i$ sind also für alle Projektoren gleichzeitig. Vorzugsweise sind jedoch gleiche Farben der verschiedenen Projektoren paarweise gegeneinander versetzt, so dass zu keinem Zeitpunkt zwei Projektoren die gleiche Farbe projizieren.

Vorteilhafterweise sind die beschriebenen Bilder $B_m$ Frames eines Bewegtbildes oder eines Filmes mit M Komponenten für die M Betrachter. Es kann also jeder Betrachter einen anderen Film sehen. Unter einem Film bzw. einem Bewegtbild sollen hier auch solche Bildfolgen verstanden werden, die digital erzeugt werden, beispielsweise durch Computerprogramme, die Daten in bewegter Weise darstellen.

Erfindungsgemäß wird außerdem eine Anzeigevorrichtung zur simultanen Projektion individueller, vorzugsweise stereoskopischer Bilder zur Betrachtung durch eine Mehrzahl M an Betrachtern angegeben. Die Anzeigevorrichtung weist dabei N Projektoren auf, wobei N die Anzahl der Farbkomponenten der zu projizierenden Bilder ist. Die Anzeigevorrichtung weist außerdem 2M Filter auf, die jeweils zwischen durchsichtig und undurchsichtig umschaltbar sind. Erfindungsgemäß ist diese Anzeigevorrichtung eingerichtet, ein wie vorstehend beschrieben ausgestaltetes Verfahren auszuführen. Vorzugsweise weist die Anzeigevorrichtung einen Prozessor wie beispielsweise eine CPU auf, die die Verfahrensschritte der vorstehend beschriebenen Verfahren steuert. Das zu dem Verfahren Beschriebene gilt für die Anzeigevorrichtung analog.

Im Folgenden soll die Erfindung anhand einiger Figuren beispielhaft erläutert werden. Gleiche Bezugszeichen kennzeichnen dabei gleiche oder entsprechende Merkmale. Die in den Beispielen beschriebenen Merkmale können darüberhinaus unabhängig von den entsprechenden Beispielen realisiert werden und zwischen verschiedenen Beispielen kombiniert werden.

Es zeigt

Figur 1     ein zeitliches Schema eines Ausführungsbeispiels des erfindungsgemäßen Verfahrens und

Figur 2     einen Signalweg mit Umsortierung von Farbkanälen und Verzögerungsmechanismen.

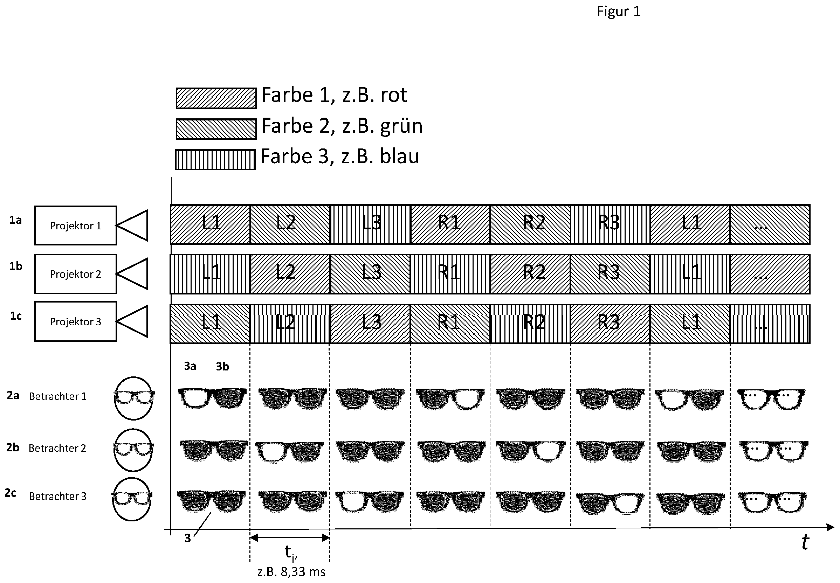

Figur 1 zeigt ein zeitliches Schema eines Beispiels des erfindungsgemäßen Verfahrens, in dem stereoskopische Bilder dargestellt werden. Das Verfahren wird hier mit drei Projektoren 1a, 1b, 1c ausgeführt sowie mit drei Betrachtern 2a, 2b, 2c. In die horizontale Richtung ist der zeitliche Verlauf aufgetragen. Die Zeilen neben den Projektoren 1a, 1b, 1c zeigen die zeitliche Abfolge der Farbkomponenten, die der Projektor der entsprechenden Zeile projiziert. Die Zeilen neben den Betrachtern 2a, 2b, 2c zeigen den Zustand von Filtern vor den Augen der Betrachter 2a, 2b, 2c, wobei hier jeweils zwei Filter 3a, 3b für die beiden Augen eines Betrachters zu einer Brille 3 verbunden sind. Ist ein Filter 3a weiß dargestellt, so bedeutet dies, dass er durchlässig für Licht ist. Ist ein Filter 3b schwarz dargestellt, so ist er zu diesem Zeitpunkt undurchlässig für Licht.

Das Verfahren ist auf den Fall nicht-stereoskopischer Bilder ohne weiteres übertragbar, wobei dann anstelle linker und rechter Teilbilder jeweils Teilbilder für beide Augen eines gegebenen Betrachters dargestellt werden.

Die Spalten der Figur 1 stellen jeweils ein Zeitintervall $t_i$ dar, in dem die Projektoren eine bestimmte Farbkomponente projizieren und die Filter 3a, 3b der Brillen 3 einen bestimmten Durchlässigkeitszustand (durchlässig oder undurchlässig) haben. Die Einträge in den Feldern der oberen drei Zeilen beschreiben nacheinander das Auge (L für links und R für rechts), dann den Betrachter (1, 2 oder 3) und die Farbe der Farbkomponente (r für rot, g für grün und b für blau).

Das Grundprinzip beruht hier darauf, dass die Projektoren 1a, 1b, 1c untereinander so synchronisiert werden, dass die zeitsequentielle Darstellung der roten, grünen und blauen Einzelbilder jeweils um eine Farbe versetzt erfolgt. Dadurch zeigt zu jedem Zeitpunkt je ein Projektor 1a, 1b, 1c ein rotes, ein grünes bzw. blaues Einzelbild. Bei dem gezeigten Beispiel werden im ersten Zeitintervall $t_1$ die Farbkomponenten für das linke Auge des ersten Betrachters 2a gezeigt, im zweiten Zeitintervall $t_2$ die Farbkomponenten für das linke Auge des zweiten Betrachters 2b und im dritten Zeitintervall $t_3$ die Farbkomponenten für das linke Auge des dritten Betrachters 2c. Es folgt im vierten Teilintervall $t_4$ die Farbkomponente für das rechte Auge des ersten Betrachters 2a, dann die Farbkomponente für das rechte Auge des zweiten Betrachters 2b und dann die Farbkomponente für das rechte Auge des dritten Betrachters 2c.

Die Filter 3a, 3b der Brillen 3 werden synchron zu den genannten Zeitintervallen so gesteuert, dass jeweils der Filter 3a, 3b vor dem Auge des entsprechenden Betrachters durchsichtig ist, im ersten Zeitintervall $t_1$ also der Filter 3a vor dem linken Auge des ersten Betrachters 2a, im zweiten Zeitintervall $t_2$ der Filter vor dem linken Auge des zweiten Betrachters 2b, im dritten Zeitintervall $t_3$ der Filter vor dem linken Auge des dritten Betrachters 2c, im vierten Zeitintervall $t_4$ der Filter vom rechten Auge des ersten Betrachters 2a, im fünften Zeitintervall $t_5$ der Filter vom rechten Auge des zweiten Betrachters 2b und im sechsten Zeitintervall $t_6$ der Filter vor dem rechten Auge des dritten Betrachters 2c. In den darauffolgenden Zeitintervallen wiederholt sich die Reihenfolge der Darstellung der Farben und die Durchsichtigschaltung der Filter 3a, 3b. Die zeitliche Anordnung der Spalten kann auch vertauscht sein.

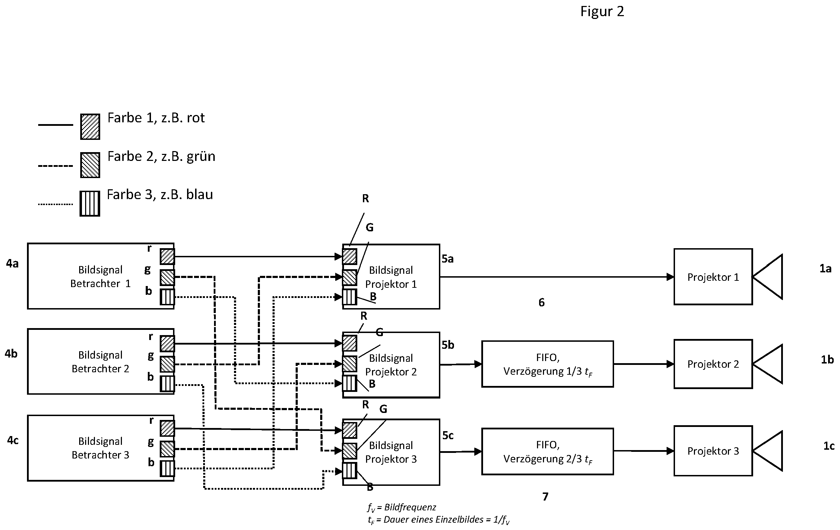

Viele Projektoren synchronisieren ihre Farbräder und damit die Phasenlage der roten, grünen und blauen Einzelbilder mit dem Eingangsbildsignal. Somit kann allein durch die Zuführung jeweils zeitversetzter Bildsignale der Versatz um einen Farbkanal erreicht werden. Eine beispielhafte Möglichkeit zur Erzeugung dieses Zeitversatzes aus vorher synchronen Bildsignalen ist in Figur 2 gezeigt.

Es werden hier die zweien der Projektoren 1b und 1c zugeführten Bildsignale jeweils in einem First-In-First-Out-Speicher (FIFO-Speicher bzw. Warteschlange) zwischengespeichert, dessen Länge ein Drittel bzw. zwei Drittel eines Einzelbildes entspricht. Im Einzelnen zeigt Figur 2 das Folgende.

Für jeden Betrachter wird ein Bildsignal 4a, 4b, 4c bereitgestellt, das jeweils drei Farbkomponenten r, g, b aufweist. Die Bildsignale 4a, 4b, 4c werden Eingängen 5a, 5b, 5c der Projektoren 1a, 1b, 1c zugeführt. Es sei darauf hingewiesen, dass hier die Eingänge 5a, 5b, 5c von den Projektoren unabhängige, aber mit diesen verbundene Vorrichtungen sein können, die beispielsweise handelsüblichen Projektoren 1a, 1b, 1c vorgeschaltet werden können.

Die Eingänge 5a, 5b, 5c weisen jeweils Eingänge R, G, B für die unterschiedlichen Farbkomponenten auf. Die Farbkomponenten r, g, b der Bildsignale 4a, 4b, 4c werden jeweils so auf die Eingänge R, G, B der Projektoren 1a, 1b, 1c verteilt, dass alle Farbkomponenten der Bildsignale 4a, 4b, 4c jeweils auf unterschiedliche Eingänge der Projektoren 5a, 5b, 5c verteilt werden. Beispielsweise wird die rote Farbkomponente r des Signals 4a auf den roten Eingang R des Eingangs 5a des Projektors 1a verteilt. Die grüne Farbkomponente g des Bildsignals 4a wird auf den Eingang G des Eingangs 5c des Projektors 1c verteilt und die blaue Farbkomponente b des Signals 4a wird auf den Eingang B des Eingangs 5b des Projektors 1b verteilt. Entsprechend werden die Farbsignale 4b und 4c verteilt.

Vom jeweiligen Eingang 5a, 5b und 5c werden die Farbkomponenten R, G, B nacheinander, also in aufeinanderfolgenden Zeitintervallen $t_i$ ausgegeben. Die vom Eingang 5a ausgegebenen Signale werden dem Projektor 1a direkt zugeführt. Die vom Eingang 5b ausgegebenen Farbsignale werden dem Projektor 1b über Zwischenschaltung eines FIFO-Speichers 6 zugeführt, der die Signale um eine Länge dt der Zeitintervalle $t_i$, also ein Drittel der Dauer eines Teilbildes verzögert. Die Farbkomponenten, die durch den Projektor 1b dargestellt werden, sind also um ein Zeitintervall $t_i$ gegenüber denen durch den Projektor 1a dargestellten verschoben.

Die vom Eingang 5c ausgegebenen Farbsignale werden durch einen Zwischenspeicher FIFO 7 um zwei Zeitintervalle dt verzögert, also um zwei Drittel der Dauer eines Einzelbildes. Dadurch stellt der Projektor 1c die Farbkomponenten um zwei Zeitintervalle dt verzögert gegenüber dem Projektor 1a dar. Auf diese Weise ergibt sich das in Figur 1 dargestellte Schema.

Der Zeitversatz kann alternativ auch durch externe, zeitversetzte Synchronisation der Projektoren über das Farbrad-Taktsignal erfolgen. Hierzu ist allerdings eine elektrische Modifikation der Projektoren erforderlich.

Das beschriebene Verfahren kann auch für andere Projektionstechnologien als DLP eingesetzt werden, sofern diese auf einem farbsequentiellen Verfahren beruhen. Solche Projektionstechnologien sind z. B. Ein-Chip-LCOS-Projektoren.

Die Erfindung kann in allen Anwendungsfällen projektionsbasierter virtueller Umgebungen genutzt werden. Sie ermöglicht in diesen erstmals ein echtes kollaboratives Arbeiten, beispielsweise im Engineering, aber auch anderen Anwendungsdomänen. Darüberhinaus sind zahlreiche weitere Anwendungsfälle möglich, auch solche, die keine Stereoskopie erfordern, beispielsweise die gleichzeitige Vorführung unterschiedlicher Filme auf derselben Projektionsleinwand.

## Patentansprüche

1. Verfahren zur simultanen Projektion individueller Bilder für eine Mehrzahl M an Betrachtern,

   wobei jedes Bild $B_m$, m=1, ..., M, entweder für einen Betrachter m jeweils ein Teilbild $T_{m\,a}$, a ∈ {links, rechts} für ein linkes und ein rechtes Auge a des Betrachters m aufweist, oder ein Teilbild $T_{m\,a=beide}$ für beide Augen eines Betrachters m ist,
   wobei jedes Teilbild $T_{m\,a}$ aus N, N ∈ N und N ≥ 2, Farbkomponenten $F_{m\,a\,c}$, c= 1, ..., N, unterschiedlicher Farbe zusammengesetzt ist,
   wobei N Projektoren $P_n$, n = 1, ..., N, jeweils in zeitlich aufeinanderfolgenden Zeitintervallen $t_i$ die Farbkomponenten der Teilbilder projizieren,
   wobei jeder Projektor alle N Farben der Farbkomponenten periodisch zeitlich in festgelegter Reihenfolge aufeinanderfolgend projiziert,
   wobei die N Projektoren zusammen in jedem Zeitintervall $t_i$ alle Farbkomponenten $F_{m\,a\,c}$, c = 1, ..., N, eines Teilbilds $T_{m\,a}$ für ein oder beide Augen a eines der Betrachter m projizieren,
   und im Laufe einer Periode alle Teilbilder $T_{m\,a}$ beider Augen a aller Betrachter m einmal projizieren,
   wobei jedem Auge a, a ∈ {links, rechts, beide}, jedes Betrachters ein Filter zugewiesen ist, der zwischen durchsichtig und undurchsichtig umschaltbar ist,
   wobei jeweils der dem Auge a des Betrachters m zugewiesene Filter in dem Zeitintervall $t_i$ durchsichtig geschaltet wird, in dem die Projektoren die Farbkomponenten des Teilbilds $T_{m\,a}$ anzeigen.

2. Verfahren nach dem vorhergehenden Anspruch, wobei alle Projektoren die N Farben der Farbkomponenten in gleicher Reihenfolge, aber zeitlich gegeneinander versetzt projizieren.

3. Verfahren nach einem der vorhergehenden Ansprüche,

   wobei von einer Signalquelle einer der Anzahl der $T_{m\,a}$ gleiche Anzahl an Teilbildsignalen bereitgestellt werden, welche die Teilbilder $T_{m\,a}$ darstellen,
   wobei die jeweils N Farbkomponenten der Teilbildsignale auf die N Projektoren verteilt werden, indem für jedes der Teilbildsignale die N Farbkomponenten dieses Bildsignals unterschiedlichen der Projektoren zugeführt werden und die jeweils dem Projektor $P_n$ zugeführten Farbkomponenten $F_{m\,a\,c}$ um einen Zeitraum $Z_n$ von $Z_n = dt*(n-1)$ verzögert werden, wobei dt die zeitliche Länge der Zeitintervalle $t_i$ ist.

4. Verfahren nach einem der vorhergehenden Ansprüche,

   wobei das Verfahren ein Verfahren zur simultanen Projektion individueller stereoskopischer Bilder für die Mehrzahl an Betrachtern ist,
   wobei jedes Bild $B_m$, m=1, ..., M, für einen der Betrachter m jeweils ein Teilbild $T_{m\,a}$, a ∈ {links, rechts} für ein linkes und ein rechtes Auge a des Betrachters m aufweist,
   wobei die N Projektoren zusammen in jedem Zeitintervall $t_i$ alle Farbkomponenten $F_{m\,a\,c}$, c = 1, ..., N, eines Teilbilds $T_{m\,a}$ für genau eines der Augen a eines der Betrachter m projizieren,
   und im Laufe einer Periode alle Teilbilder $T_{m\,a}$ beider Augen a aller Betrachter m einmal projizieren,
   wobei jedem Auge a, a ∈ {links, rechts}, jedes Betrachters ein Filter zugewiesen ist, der zwischen durchsichtig und undurchsichtig umschaltbar ist,

wobei jeweils der dem Auge a des Betrachters m zugewiesene Filter in dem Zeitintervall $t_i$ durchsichtig geschaltet wird, in dem die Projektoren die Farbkomponenten des Teilbilds $T_{m\,a}$ anzeigen.

5. Verfahren nach dem vorhergehenden Anspruch, wobei die Verzögerung der dem Projektor $P_n$ zugeführten Farbkomponenten dadurch bewirkt wird, dass die dem Projektor $P_n$ zugeführten Farbkomponenten durch einen First-in-first-out Speicher geführt wird, in dem n-1 Zeitintervalle zwischengespeichert werden.

6. Verfahren nach einem der vorhergehenden Ansprüche, wobei die Anzahl der Farbkomponenten N = 3 ist und/oder die Anzahl der Betrachter M = 3 ist.

7. Verfahren nach einem der vorhergehenden Ansprüche, wobei die Anzahl der Farbkomponenten N=3 ist und die Anzahl der Betrachter M=3 ist und den Projektoren die Bildsignale wie folgt projiziert werden:

Projektor 1: $L_{11}$, $L_{22}$, $L_{33}$, $R_{11}$, $R_{22}$, $R_{33}$, ...
Projektor 2: $L_{12}$, $L_{23}$, $L_{31}$, $R_{12}$, $R_{23}$, $R_{31}$, ...
Projektor 3: $L_{13}$, $L_{21}$, $L_{32}$, $R_{13}$, $R_{21}$, $R_{32}$, ...
wobei $L_{mc}$ die Farbkomponente $F_{m\,\text{links}\,c}$ für das linke Auge des Betrachters m bezeichnet und $R_{mc}$ die Farbkomponente $F_{m\,\text{rechts}\,c}$ für das rechte Auge des Betrachters m.

8. Verfahren nach einem der vorhergehenden Ansprüche, wobei gleiche Farbkomponenten der Bilder für unterschiedliche Augen des gleichen Betrachters dem gleichen der Projektoren zugeführt werden.

9. Verfahren nach einem der vorhergehenden Ansprüche, wobei jeweils ein Filter für ein rechtes Auge und ein Filter für ein linkes Auge des gleichen Betrachters als Brille ausgestaltet sind.

10. Verfahren nach einem der vorhergehenden Ansprüche, wobei alle Projektoren die Farbkomponenten in dergleichen Reihenfolge projizieren, wobei vorzugsweise die Projektoren jeweils ein Farbrad aufweisen, das sich im Strahlengang einer Lichtquelle des entsprechenden Projektors dreht und entlang seines Umfangs Filtersegmente in den N Farbkomponenten aufweist.

11. Verfahren nach einem der vorhergehenden Ansprüche, wobei alle Projektoren miteinander synchronisiert werden, so dass sie jeweils gleichzeitig eine Farbkomponente projizieren und gleiche Farben paarweise um ein Zeitintervall versetzt projizieren.

12. Verfahren nach einem der vorhergehenden Ansprüche, wobei die Bilder $B_m$ Frames eines Bewegtbildes oder Filmes mit M Komponenten für die M Betrachter ist.

13. Anzeigevorrichtung zur simultanen Projektion individueller stereoskopischer Bilder zur Betrachtung durch eine Mehrzahl M an Betrachtern, aufweisend

N Projektoren, wobei N die Anzahl an Farbkomponenten der zu projizierenden Bilder ist,
2M Filter, die jeweils zwischen durchsichtig und undurchsichtig umschaltbar sind,
wobei die Anzeigevorrichtung eingerichtet ist, ein Verfahren nach einem der vorhergehenden Ansprüche auszuführen.

14. Anzeigevorrichtung nach dem vorhergehenden Anspruch, aufweisend einen Prozessor, mit dem die Verfahrensschritte eines Verfahrens nach einem der vorhergehenden Ansprüche ausführbar sind.

**Claims**

1. A method for the simultaneous projection of individual images for a plurality M of viewers,

wherein each image $B_m$, m=1, ..., M, is respectively either a partial image $T_{m\,a}$, a ∈ {left, right} for a right eye and a left eye of the viewer m for a viewer m or is a partial image $T_{m\,a=both}$ for both eyes of a viewer m;
wherein each partial image $T_{m\,a}$ is assembled from N, $N \in \mathbb{N}$ and $N \geq 2$, color components $F_{m\,a\,c}$, c = 1,..., N of different colors;
wherein N projectors $P_n$, n = 1, ..., N, in each case project the color components of the part images in temporally consecutive time intervals $t_i$;
wherein each projector projects all N colors of the color components periodically temporally in a fixed order after one another;
wherein the N projectors together project all the color components $F_{m\,a\,c}$, c = 1, ..., N, of a partial image $T_{m\,a}$ for one or both eyes a of one of the viewers m in every time interval $t_i$;
and project all the partial images $T_{m\,a}$ of both eyes a of all the viewers m once in the course of a period;
wherein a filter that can be switched between transparent and opaque is assigned to each eye a, a ∈ (left, right, both) of each viewer; and

wherein the respective filter assigned to the eye a of the viewer m is switched to transparent in the time interval $t_i$ in which the projectors display the color components of the partial image $T_{m\,a}$.

2. A method in accordance with the preceding claim, wherein all the projectors project the N colors of the components in the same order, but offset in time from one another.

3. A method in accordance with one of the preceding claims,

   wherein a number of partial image signals equal to the number $T_{m\,a}$ that represent the partial images $T_{m\,a}$ are provided by a signal source, wherein the respective N color components of the partial image signals are distributed over the N projectors in that the N color components of this image signal are supplied to different ones of the projectors for each of the partial image signals; and
   the color components $F_{m\,a\,c}$ respectively supplied to the projectors $P_n$ are preferably delayed by a time period $Z_n$ of $Z_n = dt*(n-1)$, where dt is the temporal length of the time interval $t_i$.

4. A method in accordance with one of the preceding claims,

   wherein the method is a method for the simultaneous projection of individual stereoscopic images for the plurality of viewers,
   wherein each image $B_m$, m=1, ..., M, for one of the viewers m is respectively either a partial image $T_{m\,a}$, $a \in \{left, right\}$ for a right eye and a left eye of the viewer m;
   wherein the N projectors together project all the color components $F_{m\,a\,c}$, c = 1, ..., N, of a partial image $T_{m\,a}$ for exactly one eye a of one of the viewers m in every time period $t_i$;
   and project all the partial images $T_{m\,a}$ of both eyes a of all the viewers m once in the course of a period;
   wherein a filter that can be switched between transparent and opaque is assigned to each eye a, $a \in \{left, right, both\}$ of each viewer; and
   wherein the respective filter assigned to the eye a of the viewer m is switched to transparent in the time interval $t_i$ in which the projectors display the color components of the partial image $T_{m\,a}$.

5. A method in accordance with the preceding claim, wherein the delay of the color components supplied to the projector $P_n$ is effected in that the color components supplied to the projector $P_n$ are led through a first-in first-out memory in which n-1 time intervals are buffered.

6. A method in accordance with one of the preceding claims,
   wherein the number of the color components is N = 3 and/or the number of viewers is M = 3.

7. A method in accordance with one of the preceding claims, wherein the number of the color components is N = 3 and the number of the viewers is M = 3 and the image signals are projected to the projectors as follows:

   Projector 1: $L_{11}$, $L_{22}$, $L_{33}$, $R_{11}$, $R_{22}$, $R_{33}$, ...
   Projector 2: $L_{12}$, $L_{23}$, $L_{31}$, $R_{12}$, $R_{23}$, $R_{31}$,
   Projector 3: $L_{13}$, $L_{21}$, $L_{32}$, $R_{13}$, $R_{21}$, $R_{32}$, ...
   where $L_{mc}$ stands for the color component $F_{m\,left\,c}$ for the left eye of the viewer m and $R_{mc}$ for the color component $F_{m\,right\,c}$ for the right eye of the viewer m.

8. A method in accordance with one of the preceding claims, wherein color components of the images for different eyes of the same viewer are supplied to the same one of the projectors.

9. A method in accordance with one of the preceding claims wherein a respective filter for a right eye and a filter for a left eye of the same viewer are designed as spectacles.

10. A method in accordance with one of the preceding claims, wherein all the projectors project the color components in the same order, with the projectors preferably each having a color wheel that rotates in the optical path of a light source of the corresponding projector and has filter segments in the N color components along its periphery.

11. A method in accordance with one of the preceding claims, wherein all the projectors are synchronized with one another so that they each simultaneously project a color component and project the same colors pairwise offset by a time interval.

12. A method in accordance with one of the preceding claims,
    wherein the images $B_m$ are frames of a moving image or of a film having M components for the M viewers.

13. A display device for the simultaneous projection of individual stereoscopic images for viewing by a plurality M of viewers, comprising

    N projectors, where N is the number of color components of the images to be projected;
    2M filters that can each be switched between transparent and opaque,
    wherein the display device is configured to perform a method in accordance with one of the preceding claims.

**14.** A display device in accordance with the preceding claim,
comprising a processor with which the method steps of a method in accordance with one of the preceding claims can be performed.

**Revendications**

**1.** Procédé pour la projection simultanée d'images individuelles pour une pluralité M d'observateurs,

dans lequel chaque image $B_m$, m=1, ..., M, soit pour un observateur m présente respectivement une image partielle $T_{m\,a}$, a $\in$ {gauche, droite} pour un œil gauche et un œil droit a de l'observateur m, soit

est une image partielle $T_{m\,a=les\ deux}$ pour les deux yeux d'un observateur m,

dans lequel chaque image partielle $T_{m\,a}$ est composée de N, N e N et N $\geq$ 2, composantes de couleur $F_{m\,a\,c}$, c= 1, ..., N, de couleur différente,

dans lequel N projecteurs $P_n$, n = 1, ..., N, projettent les composantes de couleur des images partielles respectivement à des intervalles de temps $t_i$ qui se succèdent dans le temps,

dans lequel chaque projecteur projette toutes les N couleurs des composantes de couleur périodiquement et successivement dans le temps dans un ordre déterminé,

dans lequel les N projecteurs projettent ensemble à chaque intervalle de temps $t_i$ toutes les composantes de couleur $F_{m\,a\,c}$, c = 1, ..., N, d'une image partielle $T_{m\,a}$ pour un ou les deux yeux a d'un des observateurs m,

et au cours d'une période projettent une fois toutes les images partielles $T_{m\,a}$ des deux yeux a de tous les observateurs m,

dans lequel un filtre qui peut basculer entre transparent et opaque est attribué chaque œil a, a $\in$ {gauche, droite, les deux}, de chaque observateur,

dans lequel respectivement le filtre attribué à l'œil a de l'observateur m est respectivement rendu transparent dans l'intervalle de temps $t_i$

dans lequel les projecteurs affichent les composantes de couleur de l'image partielle $T_{m\,a}$.

**2.** Procédé selon la revendication précédente, dans lequel tous les projecteurs projettent les N couleurs des composantes de couleur dans le même ordre, mais de manière décalée dans le temps les unes par rapport aux autres.

**3.** Procédé selon l'une quelconque des revendications précédentes,

dans lequel un nombre de signaux d'images partielles égal au nombre de $T_{m\,a}$ est fourni par une source de signaux, lesquels représentent les images partielles $T_{m\,a}$,

dans lequel les respectivement N composantes de couleur des signaux d'images partielles sont réparties sur les N projecteurs, du fait que, pour chacun des signaux d'images partielles, les N composantes de couleur de ce signal d'image sont amenées à des projecteurs différents et les composantes de couleur $F_{m\,a\,c}$ respectivement amenées au projecteur $P_n$ sont retardées d'un intervalle de temps $Z_n$ de $Z_n$ = dt*(n-1), dans lequel dt est la longueur temporelle des intervalles de temps $t_i$.

**4.** Procédé selon l'une quelconque des revendications précédentes, dans lequel le procédé est un procédé pour la projection simultanée d'images stéréoscopiques individuelles pour la pluralité d'observateurs,

dans lequel chaque image $B_m$, m=1, ..., M, pour un des observateurs m représente respectivement une image partielle $T_{m\,a}$, a $\in$ {gauche, droite} pour un œil gauche et un œil droit a de l'observateur m,

dans lequel les N projecteurs projettent ensemble à chaque intervalle de temps $t_i$ toutes les composantes de couleur $F_{m\,a\,c}$, c = 1, ..., N, d'une image partielle $T_{m\,a}$ pour un seul des yeux a d'un des observateurs m, et au cours d'une période projettent une fois toutes les images partielles $T_{m\,a}$ des deux yeux a de tous les observateurs m,

dans lequel à chaque œil a, a $\in$ {gauche, droite}, de chaque observateur est attribué un filtre, qui peut basculer entre transparent et opaque,

dans lequel respectivement le filtre attribué à l'œil a de l'observateur m est respectivement rendu transparent dans l'intervalle de temps $t_i$

dans lequel les projecteurs affichent les composantes de couleur de l'image partielle $T_{m\,a}$.

**5.** Procédé selon la revendication précédente, dans lequel le retard des composantes de couleur amenées au projecteur $P_n$ est provoqué du fait que les composantes de couleur amenées au projecteur $P_n$ est guidée par une mémoire premier entré-premier sorti, dans laquelle n-1 intervalles de temps sont stockées temporairement.

**6.** Procédé selon l'une quelconque des revendications précédentes, dans lequel le nombre de composantes de couleur est N = 3 et/ou le nombre d'observateurs est M = 3.

**7.** Procédé selon l'une quelconque des revendications précédentes, dans lequel le nombre de composantes de couleur est N=3 et le nombre d'observateurs est M=3 et les signaux d'image sont projetés aux projecteurs comme suit :

Projecteur 1 : $L_{11}$, $L_{22}$, $L_{33}$, $R_{11}$, $R_{22}$, $R_{33}$, ...
Projecteur 2 : $L_{12}$, $L_{23}$, $L_{31}$, $R_{12}$, $R_{23}$, $R_{31}$, ...
Projecteur 3 : $L_{13}$, $L_{21}$, $L_{32}$, $R_{13}$, $R_{21}$, $R_{32}$, ...
dans lequel $L_{mc}$ désigne la composante de couleur $F_{m\ gauche\ c}$ pour l'œil gauche de l'observateur m et $R_{mc}$ la composante de couleur Fmc droite c pour l'œil droit de l'observateur m.

**8.** Procédé selon l'une quelconque des revendications précédentes, dans lequel des composantes de couleur identiques des images pour différents yeux du même observateur sont amenées au même des projecteurs.

**9.** Procédé selon l'une quelconque des revendications précédentes, dans lequel respectivement un filtre pour un œil droit et un filtre pour un œil gauche du même observateur sont conçus comme des lunettes.

**10.** Procédé selon l'une quelconque des revendications précédentes, dans lequel tous les projecteurs projettent les composantes de couleur dans le même ordre, dans lequel de préférence les projecteurs présentent respectivement une roue chromatique qui tourne dans le trajet de faisceau d'une source lumineuse du projecteur correspondant et présente le long de sa périphérie des segments de filtre dans les N composantes de couleur.

**11.** Procédé selon l'une quelconque des revendications précédentes, dans lequel tous les projecteurs sont synchronisés entre eux de sorte qu'ils projettent respectivement simultanément une composante de couleur et projettent des couleurs identiques par paires de manière décalée d'un intervalle de temps.

**12.** Procédé selon l'une quelconque des revendications précédentes, dans lequel les images $B_m$ sont des trames d'une image animée ou d'un film avec M composantes pour les M observateurs.

**13.** Dispositif d'affichage pour la projection simultanée d'images stéréoscopiques individuelles pour l'observation par une pluralité M d'observateurs, présentant

N projecteurs, dans lequel N est le nombre de composantes de couleur des images à projeter,
2M filtres, qui peuvent respectivement basculer entre transparent et opaque,
dans lequel le dispositif d'affichage est conçu pour mettre en œuvre un procédé selon l'une quelconque des revendications précédentes.

**14.** Dispositif d'affichage selon la revendication précédente, présentant un processeur, avec lequel les étapes de procédé selon l'une quelconque des revendications précédentes peuvent être mises en œuvre.

Figur 1

Farbe 1, z.B. rot
Farbe 2, z.B. grün
Farbe 3, z.B. blau

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   WO 2012028586 A1, A. Zink and B. Froehlich

**In der Beschreibung aufgeführte Nicht-Patentliteratur**

*   **C. CRUZ-NEIRA ; D. J. SANDIN ; T.A . DEFANTI.** Surround-screen Projection-based Virtual Reality: The Design and Implementation of the CAVE. *Proceedings of the 20th Annual Conference on Computer Graphics and Interactive Techniques,* 1993, 135-142

*   **A. KULIK et al.** C1x6: A Stereoscopic Six-user Display for Co-located Collaboration in Shared Virtual Environments. *ACM Trans. Graph.,* 2011, vol. 30 (0. 6), 188-1, 188-12